(19) **Europäisches Patentamt**

**European Patent Office**

**Office européen des brevets**

(11) **EP 1 127 232 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(21) Anmeldenummer: **99957279.5**

(22) Anmeldetag: **03.11.1999**

(51) Int Cl.⁷: **F16H 61/00**

(86) Internationale Anmeldenummer:
**PCT/EP1999/008424**

(87) Internationale Veröffentlichungsnummer:
**WO 2000/028241 (18.05.2000 Gazette 2000/20)**

(54) **VERFAHREN ZUR EINSTELLUNG DES ÜBERSETZUNGSWERTES FÜR EIN STUFENLOSES UMSCHLINGUNGSGETRIEBE**

METHOD FOR ADJUSTING THE RATIO OF TRANSMISSION IN A CONTINUOUS VARIABLE TRANSMISSION

PROCEDE DE REGLAGE DE LA VALEUR DU RAPPORT DE TRANSMISSION POUR UNE TRANSMISSION A VARIATION CONTINUE A ELEMENT EN BOUCLE

(84) Benannte Vertragsstaaten:
**DE**

(30) Priorität: **06.11.1998 DE 19851110**

(43) Veröffentlichungstag der Anmeldung:
**29.08.2001 Patentblatt 2001/35**

(73) Patentinhaber: **ZF Batavia, L.L.C.**
**Batavia, OH 45103 (US)**

(72) Erfinder:
- **DANZ, Wolfgang**
  **D-88046 Friedrichshafen (DE)**
- **PIEPENBRINK, Andreas**
  **D-88709 Meersburg (DE)**
- **SCHWENGER, Andreas**
  **D-88048 Friedrichshafen (DE)**

(74) Vertreter: **Zietlow, Karl-Peter**
**ZF FRIEDRICHSHAFEN AG**
**88038 Friedrichshafen (DE)**

(56) Entgegenhaltungen:
EP-A- 0 061 733          EP-A- 0 634 590
EP-A- 0 760 441          DE-A- 3 310 786
DE-A- 19 606 311

- **PATENT ABSTRACTS OF JAPAN vol. 13, no. 340 (M-857), 31. Juli 1989 (1989-07-31) & JP 01 116365 A (DAIHATSU MOTOR CO LTD), 9. Mai 1989 (1989-05-09)**

**Beschreibung**

Die vorliegende Erfindung betrifft ein Verfahren zur Einstellung des Übersetzungswertes für ein stufenloses Umschlingungsgetriebe eines Kraftfahrzeugs gemäß dem Oberbegriff des Patentanspruchs 1.

Ein stufenloses Automatgetriebe nach dem Umschlingungsprinzip (CVT-Getriebe) besteht üblicherweise u. a. aus einer Anfahreinheit, einer Vorwärts/Rückwärtsfahreinheit, einer Zwischenwelle, einem Differential, aus hydraulischen und elekronischen Steuereinrichtungen sowie aus einem Variator. Der Variator umfasst üblicherweise eine Primär- und eine Sekundärscheibe auch Primär- und Sekundärseite genannt, wobei beide Scheiben aus paarweise angeordneten Kegelscheiben gebildet sind und ist mit einem momentenübertragenden Umschlingungselement versehen, das zwischen den beiden Kegelscheibenpaaren umläuft. In einem derartigen Getriebe wird die aktuelle Übersetzung durch den Laufradius des Umschlingungselementes definiert, der wiederum eine Funktion der axialen Position der Kegelscheiben ist.

Bei einer Übersetzungsänderung werden folglich konstruktionsbedingt die Kegelscheibenpaare von Primär- und Sekundärscheibe des Variators wechselseitig und komplementär zueinander über entsprechende Ansteuerelemente auseinanderund zusammengeschoben, was eine Änderung des Laufradius des Umschlingungselementes auf den Kegelscheiben und somit eine Änderung der Übersetzung zwischen Primär-und Sekundärseite bewirkt.

Nach dem Stand der Technik erfolgt meist eine funktionelle Aufteilung des Variators in die Primärseite zur Beeinflussung der Übersetzungsänderung (Verstellung) und in die Sekundärseite zur Einstellung der notwendigen Anpreßdrücke (Anpressung), die den erforderlichen Kontakt zwischen der Scheibe und dem Umschlingungselement gewährleisten, so dass kein Schlupf entsteht.

Aus der gattungsgemäßen EP 0 634 590 A1 ist ein Verfahren und eine hydraulische Steuerung zur Übersetzungsverstellung eines Umschlingungs-CVT bekanntgeworden, bei dem der minimal erforderliche Anpreßdruckbedarf, der sich aus aktueller Übersetzung und aktuell zu übertragenem Drehmoment am Variator errechnet, bedarfsweise entweder über den Druck an der Sekundärscheibe oder über den Druck an der Primärscheibe abgedeckt wird. Dabei ist die hydraulische Steuerung des Variators als Reihenschaltung von einem direkt an die Ölpumpe gekoppelten Sekundärventil und einem Primärventil ausgebildet, wobei der Sekundärdruck dem Pumpendruck entspricht und der Primärdruck zu keiner Zeit unterhalb des Sekundärdrucks liegen kann. In den Betriebszuständen, in denen die Primärscheibe systemdruckbestimmend ist, wird der Sekundärdruck entsprechend angehoben, um den minimal erforderlichen Anpreßdruck an der Primärscheibe zu gewährleisten.

Der Stand der Technik lehrt weiterhin, zur Vermeidung von Schlupf zwischen der Scheibe und dem Umschlingungselement große Sicherheitsaufschläge auf die berechneten Steuerdruckwerte aufzulegen. Diese Vorgehensweise weist den Nachteil auf, dass dadurch der Wirkungsgrad des Automatgetriebes verschlechtert wird.

Zudem wird durch die Beschränkung der Stellgröße zur Einleitung einer Übersetzungsänderung auf die Primärseite des Variators die Verstelldynamik deutlich eingeschränkt.

Hierbei werden üblicherweise Regelkreisstrukturen verwendet, wie sie in der DE 196 06 311 A1 der Anmelderin beschrieben sind. Derartige Regelkreisstrukturen kombinieren eine physikalisch-mathematisch modellbasierte Linearisierung der Regelstrecke mittels eines Korrekturgliedes mit einem linearen PID-Regler. Die Stellgröße des PID-Reglers wird dabei direkt als Vorgabe für den einzustellenden Verstellgradienten interpretiert.

Der vorliegenden Erfindung liegt daher die Aufgabe zugrunde, ausgehend von dem erwähnten Stand der Technik, ein Verfahren zur Einstellung des Übersetzungswertes für ein stufenloses Umschlingungsgetriebe anzugeben, derart, dass ein bestmöglicher Getriebewirkungsgrad bei gleichzeitiger Ausnutzung aller Freiheitsgrade der Verstelldynamik und gleichzeitigem bestmöglichen Schutz des Getriebes erzielt wird.

Das erfindungsgemäße Verfahren soll die Anpressung an die Betriebspunktlage derart anpassen, dass es möglich wird, die wirkungsgradrelevanten Effekte einer Überanpressung auf ein Minimum zu reduzieren.

Diese Aufgabe ist gemäß der Erfindung durch die Merkmale des Patentanspruchs 1 gelöst. Weitere Ausgestaltungen der Erfindung gehen aus den Unteransprüchen hervor.

Demnach wird vorgeschlagen, die Primär- und Sekundärseite des Variators bezüglich der Verstellung und Anpressung als absolut gleichberechtigt zu betrachten und für beide Scheiben aufgrund der aktuellen Übersetzung und des aktuell zu übertragenden Momentes eine Anpreßdruckminimalkraft zur Umschlingungselementanpressung zu berechnen. Desweiteren wird vorgeschlagen, in Abhängigkeit der berechneten Anpreßdruckminimalkraft die Primär- oder die Sekundärscheibe als einzusetzende Stellgröße zu bestimmen. Diese wird erfindungsgemäß durch Vergleich der geforderten Druckvorgaben mit den berechneten Anpreßdruckminimalwerten ermittelt.

Die Berechnung der Anpreßdruckminimalwerten (Sollwerte) erfolgt erfindungsgemäß auf Basis eines physikalischmathematischen Modells.

Die Erfindung ist im folgenden anhand der beigefügten Zeichnung, näher erläutert. In dieser stellen dar:

Fig. 1    eine Blockschaltbilddarstellung der allgemeinen Regelkreisstruktur gemäß der vorliegenden Erfindung,

Fig. 2 eine Blockschaltbilddarstellung eines Ausschnittes der Regelkreisstruktur für ein Band als Umschlingungselement gemäß einer ersten Variante der vorliegenden Erfindung und

Fig. 3 eine Blockschaltbilddarstellung eines Ausschnittes der Regelkreisstruktur für ein Band als Umschlingungselement gemäß einer zweiten Variante der vorliegenden Erfindung.

Der erste Schritt des erfindungsgemäßen Verfahrens besteht in der Berechnung der minimalen Anpreßdruckminimalkräfte bzw. Anpreßdrucksollwerte für beide Variatorseiten. Diese erfolgt anhand folgender Gleichungen:

$$p_{1,min} = \frac{T_1 \cdot \cos(\alpha)}{2 \cdot \mu \cdot A_1 \cdot r_1} \cdot SF_1$$

$$p_{2,min} = \frac{T_1 \cdot \cos(\alpha)}{2 \cdot \mu \cdot A_2 \cdot r_1} \cdot SF_2$$

mit:

$p_{1,min}$: Anpreßdruckminimalkraft Primärseite
$p_{2,min}$: Anpreßdruckminimalkraft Sekundärseite
$T_1$: Antriebsmoment an der Primärseite des Variators
$A_1$: Scheibenfläche der Primärseite
$A_2$: Scheibenfläche der Sekundärseite
$r_1$: aktueller Laufradius Primärseite
$r_2$: aktueller Laufradius der Sekundärseite
$\alpha$: Scheibenwinkel
$\mu$: Reibbeiwert des Kontaktes Band-Kegelscheibe
$SF_1$: Sicherheitsfaktor der Primärseite
$SF_2$: Sicherheitsfaktor der Sekundärseite

Jeder Variatorseite wird hierbei erfindungsgemäß ein eigener, separat einstellbarer Sicherheitsfaktor zugeteilt. Die Berechnung der aktuellen Laufradien ($r_1$, $r_2$) erfolgt gemäß der feststehenden geometrischen Beziehungen. Zur Optimierung der Rechenzeit werden diese Beziehungen auf dem Getriebesteuergerät über Kennlinien bzw. Kennfelder als Funktionen der Variator-Übersetzung (iv) abgelegt.

Der von den primär- und sekundärseitig eingeleiteten Drücken (Kräften) abhängige Verstellgradient (Übersetzungsänderungsgeschwindigkeit) kann als physikalisch-mathematische Modellgleichung wie folgt dargestellt werden:

$$k(iv) \cdot \frac{div}{dt} = p_2 \cdot A_2 \cdot k_p k_s - p_1 \cdot A_1$$

mit:

$k(iv)$: übersetzungsabhängiger Dämpfungsbeiwert
$div/dt$: Verstellgradient (Übersetzungsgradient)
$p_1$: Ansteuerdruck der Primärseite
$p_2$: Ansteuerdruck der Sekundärseite
$A_1$: Scheibenfläche der Primärseite
$A_2$: Scheibenfläche der Sekundärseite
$k_p k_s$: Verstellkraftverhältnis

Der Dämpfungsbeiwert, sowie das Verstellkraftverhältnis werden zur Optimierung der Rechenzeit auf dem Getriebesteuergerät ebenfalls als Kennlinie ($k(iv)$ = f(iv)) bzw. als Kennfeld (kpks = f(iv, 1/SF)) dargestellt.

Durch Umstellen der Gleichung des Verstellgradienten nach den Ansteuerdrücken der Primär- bzw. Sekundärseite ergibt sich folgende Berechnungsvorschrift für die Einstellung der Ansteuerdrücke in Abhängigkeit von einer geforderten Verstellgradientenvorgabe:

$$p_{1,soll} = \frac{1}{A_1}\left(p_{2,min} \cdot A_2 \cdot k_p k_s - k(iv) \cdot \left.\frac{div}{dt}\right|_{soll}\right) \quad \text{für} \quad p_{2,soll} = p_{2,min}$$

und entsprechend

$$p_{2,soll} = \frac{1}{A_2 \cdot k_p k_s}\left(k(iv) \cdot \left.\frac{div}{dt}\right|_{soll} + p_{1,min} \cdot A_1\right) \quad \text{für} \quad p_{1,soll} = p_{1,min} \cdot$$

Die für die aktuelle Verstellanforderung einzusetzende Stellgröße (Primär- oder Sekundärseite) wird erfindungsgemäß durch Vergleich der geforderten Druckvorgaben mit den berechneten Anpreßdruckminimalwerten ermittelt. Die Stellgröße der Verstellregelung wechselt somit stets zwischen Primär-und Sekundärseite hin- und her. Prinzipbedingt ergeben sich hierbei kontinuierliche Druckübergänge, wobei im Umschaltzeitpunkt kein Drucksprung entsteht.

Da der Getriebeschutz oberste Priorität hat, steht die Einhaltung der notwendigen Anpressdruckminimalwerte im Vordergrund. Folglich ergibt sich ein Wechsel in der Stellgröße von der Primärseite zur Sekundärseite, wenn $p_{1,soll} \le p_{1,min}$ gilt. Entsprechend ergibt sich ein Zustandswechsel von der Sekundär- zur Primärseite, wenn die Bedingung $p_{2,soll} \le p_{2,min}$ erfüllt wird. Somit wird gewährleistet, dass der minimale erforderliche Druckwert nicht unterschritten wird.

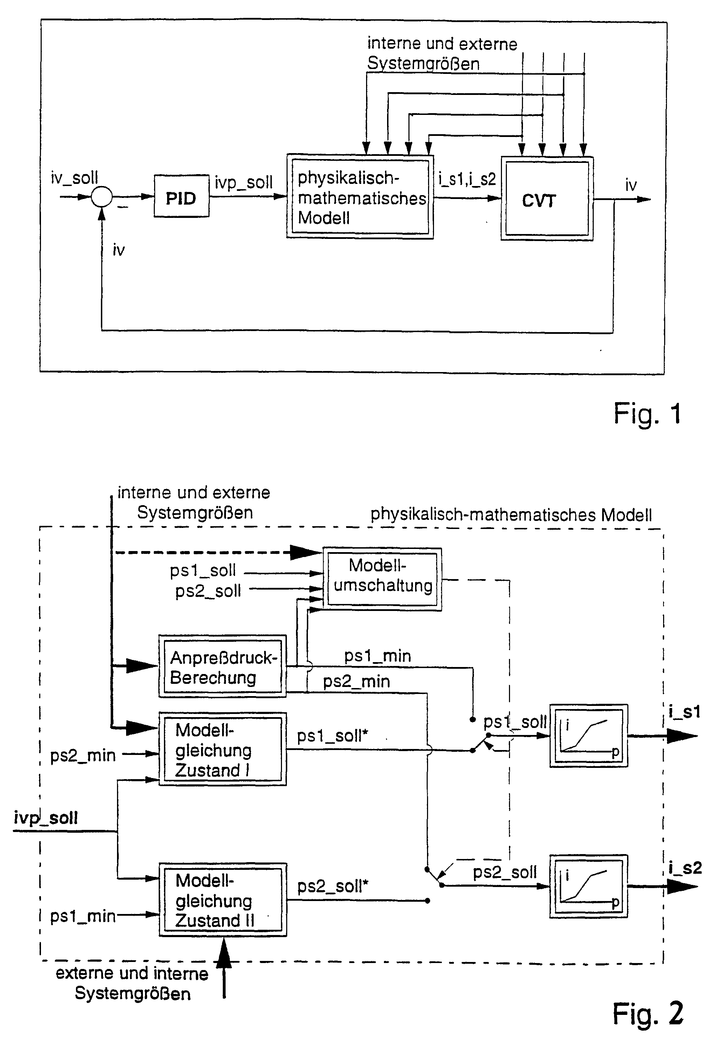

Die oben beschriebenen Berechnungsvorschriften für die Druckwerte von Primär- und Sekundärseite des Variators werden als Vorsteuerung in einen aus dem Stand der Technik bekannten Regelkreis mit der Soll-Übersetzung iv_soll als Führungsgröße eingebunden, der in Fig. 1 schematisch dargestellt ist.

Gemäß Fig. 1 ist die modellbasierte Druckberechnung gemäß der Erfindung aus regelungstechnischer Sicht das "inverse Modell" der realen Regelstrecke bzw. des Variators und kann somit gemäß dem Stand der Technik zur Linearisierung der Regelstrecke mit verwendet werden. Das der vorliegenden Erfindung zugrundeliegende physikalisch-mathematische Modell wird im Block "physikalisch-mathematisches Modell" berücksichtigt. Da die resultierende Ersatzregelstrecke aus dem berücksichtigten inversen rechnerischen Modell und der realen Regelstrecke ein lineares Verhalten zeigt, kann mit einem einfachen linearen Regler eine Kompensation noch verbleibender Modellungenauigkeiten, sowie dynamischer Störungen durchgeführt werden.

Die beigefügte selbsterklärende Fig. 2 zeigt schematisch eine Blockschaltbilddarstellung des Blocks "physikalisch-mathematisches Modell" aus Figur 1 gemäß einer Variante des erfindungsgemäßen Verfahrens. Hierbei erfolgt die Auswertung der Modellgleichungen anhand der Verstellgradientenvorgabe für die beiden Scheiben in den Blöcken "Modellgleichung Zustand I" und "Modellgleichung Zustand II" parallel. Gleichzeitig wird die Anpressdruckberechnung im Block "Anpreßdruckberechnung" kontinuierlich durchgeführt und anhand der oben genannten Kriterien zwischen den beiden Zuständen mittels des Blocks "Modellumschaltung" umgeschaltet. Zu Beginn des Verfahrens ist die Primärseite die Stellgröße.

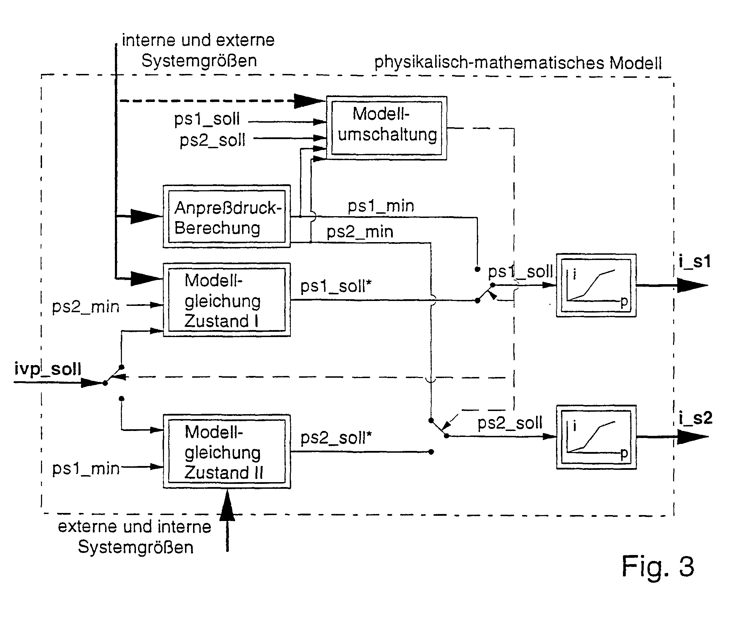

Es ist jedoch im Rahmen einer in der selbsterklärenden Fig. 3 dargestellten Variante möglich, lediglich die Modellgleichung der aktuellen Stellgröße auszuwerten und erst bei Erkennen der Notwendigkeit eines Zustandswechsels mittels des Blocks "Modellumschaltung" entsprechend umzuschalten und die Auswertung der Modellgleichung für die andere Seite durchzuführen.

Bezugszeichen

| | |
|---|---|
| $p_{1,min}$: | Anpreßdruckminimalkraft Primärseite |
| $p_{2,min}$: | Anpreßdruckminimalkraft Sekundärseite |
| $T_1$: | Antriebsmoment an der Primärseite des Variators |
| $A_1$: | Scheibenfläche der Primärseite |
| $A_2$: | Scheibenfläche der Sekundärseite |
| $r_1$: | aktueller Laufradius Primärseite |
| $r_2$: | aktueller Laufradius der Sekundärseite |
| $\alpha$: | Scheibenwinkel |

| | |
|---|---|
| $\mu$: | Reibbeiwert des Kontaktes Band-Kegelscheibe |
| $SF_1$: | Sicherheitsfaktor der Primärseite |
| $SF_2$: | Sicherheitsfaktor der Sekundärseite |
| k(iv): | übersetzungsabhängiger Dämpfungsbeiwert |
| div/dt: | Verstellgradient (Übersetzungsgradient) |
| $p_1$: | Ansteuerdruck der Primärseite |
| $p_2$: | Ansteuerdruck der Sekundärseite |
| $k_p k_s$: | Verstellkraftverhältnis |
| iv: | Übersetzung |
| $p_{1,soll}$: | geforderte Druckvorgabe Primärseite |
| $p_{2,soll}$: | geforderte Druckvorgabe Sekundärseite |

**Patentansprüche**

1. Verfahren zur Einstellung des Übersetzungswertes für ein stufenloses Umschlingungsgetriebe mit einem Variator, bei dem für beide Variatorscheiben aufgrund einer aktuellen Übersetzung und eines aktuell zu übertragenden Momentes kontinuierlich ein minimaler Anpreßdruck ($p_{1,min}$, $p_{2,min}$) zur Umschlingungselementanpressung und eine Druckvorgabe ($p_{1,soll}$, $p_{2,soll}$) zur Übersetzungsverstellung des Variators berechnet wird, **dadurch gekennzeichnet, daß** die Primär- oder die Sekundärscheibe als einzusetzende Stellgröße für die Variatorübersetzung (iv) bei einer Übersetzungsverstellung in Abhängigkeit von der berechneten minimalen Anpreßdruck ($p_{1,min}$, $p_{2,min}$) bestimmt wird, wobei die Bestimmung der Stellgröße durch einen Vergleich der geforderten Druckvorgaben ($p_{1,soll}$, $P_{2,soll}$) mit den berechneten Anpreßdruckminimalwerten ($p_{1,min}$, $p_{2,min}$) erfolgt, derart, daß ein Zustandswechsel in der Stellgröße von der Primärzur Sekundärseite erfolgt, wenn eine Bedingung $p_{1,soll} \leq p_{1,min}$, nämlich Druckvorgabe primär kleiner oder gleich Minimalanpreßdruckprimär, erfüllt ist, und daß ein Zustandswechsel von der Sekundär- zur Primärseite erfolgt, wenn eine Bedingung $p_{2,soll} \leq p_{2,min}$, nämlich Druckvorgabe sekundär kleiner oder gleich Minimalanpreßdruck sekundär, erfüllt ist, wobei zu Beginn des Verfahrens die Primärseite die Stellgröße ist, und wobei die geforderte Druckvorgabe ($p_{1,soll}$) für die Primärscheibe größer sein kann als die geforderte Druckvorgabe ($p_{2,soll}$) für die Sekundärscheibe.

2. Verfahren nach Anspruch 1, **dadurch gekennzeichnet, daß** die Berechnung der minimalen Anpreßdrücke ($p_{1,min}$, $p_{2,min}$) auf Basis eines physikalischmathematischen Modells erfolgt.

3. Verfahren nach Anspruch 2, **dadurch gekennzeichnet, daß** die Berechnung der minimalen Anpreßdrücke ($p_{1,min}$, $p_{2,min}$) anhand folgender Gleichungen erfolgt:

$$p_{1,min} = \frac{T_1 \cdot \cos(\alpha)}{2 \cdot \mu \cdot A_1 \cdot r_1} \cdot SF_1$$

$$p_{2,min} = \frac{T_1 \cdot \cos(\alpha)}{2 \cdot \mu \cdot A_2 \cdot r_1} \cdot SF_2$$

mit:

| | |
|---|---|
| $p_{1,min}$: | mininaler Anpreßdruck Primärseite |
| $p_{2,min}$: | minimaler Anpreßdruck Sekundärseite |
| $T_1$: | Antriebsmoment an der Primärseite des Variators |
| $A_1$: | Scheibenfläche der Primärseite |
| $A_2$: | Scheibenfläche der Sekundärseite |
| $r_1$: | aktueller Laufradius Primärseite |
| $r_2$: | aktueller Laufradius der Sekundärseite |
| $\alpha$: | Scheibenwinkel |
| $\mu$: | Reibbeiwert des Kontaktes Band-Kegelscheibe |
| $SF_1$: | Sicherheitsfaktor der Primärseite |
| $SF_2$: | Sicherheitsfaktor der Sekundärseite, |

wobei jeder Variatorseite ein separat einstellbarer Sicherheitsfaktor (SF$_1$, SF$_2$) zugeteilt wird und die Berechnung der aktuellen Laufradien (r$_1$, r$_2$) gemäß der feststehenden geometrischen Beziehungen erfolgt.

4. Verfahren nach Anspruch 3, **dadurch gekennzeichnet, daß** zur Optimierung der Rechenzeit die Beziehungen zur Berechnung der Anpreßdruckminimalkräfte (p$_{1,min}$, p$_{2,min}$) auf dem Getriebesteuergerät über Kennfelder als Funktionen der Variator-Übersetzung (iv) und des primärseitigen Antriebsmoments (T1) abgelegt werden.

5. Verfahren nach einem der vorangehenden Ansprüche, **dadurch gekennzeichnet, daß** der von den primär- und sekundärseitig eingeleiteten Drücken abhängige Verstellgradient (div/dt) des Variators als physikalisch-mathematische Modellgleichung wie folgt dargestellt wird:

$$k(iv) \cdot \frac{div}{dt} = p_2 \cdot A_2 \cdot k_p k_s - p_1 \cdot A_1$$

mit:

k(iv): übersetzungsabhängiger Dämpfungsbeiwert
div/dt: Verstellgradient (Übersetzungsgradient)
p$_1$: Ansteuerdruck der Primärseite
p$_2$: Ansteuerdruck der Sekundärseite
A$_1$: Scheibenfläche der Primärseite
A$_2$: Scheibenfläche der Sekundärseite
k$_p$k$_s$: Verstellkraftverhältnis,

wobei für die Druckvorgaben (p$_{1,soll}$, p$_{2,soll}$) für die Primär- bzw. Sekundärscheibe in Abhängigkeit von einer geforderten Verstellgradientenvorgabe (div/dt) gilt:

$$p_{1,soll} = \frac{1}{A_1}\left( p_{2,min} \cdot A_2 \cdot k_p k_s - k(iv) \cdot \left.\frac{div}{dt}\right|_{soll}\right) \text{ für } p_{2,soll} = p_{2,min}$$

und

$$p_{2,soll} = \frac{1}{A2 \cdot k_p k_s}\left( k(iv) \cdot \left.\frac{div}{dt}\right|_{soll} + p_{1,min} \cdot A_1\right) \text{ für } p_{1,soll} = p_{1,min} \cdot$$

6. Verfahren nach Anspruch 5, **dadurch gekennzeichnet, daß** der Dämpfungsbeiwert und das Verstellkraftverhältnis (k$_p$k$_s$)auf dem Getriebesteuergerät als Kennlinie (k(iv) = f(iv)) bzw. als Kennfeld (kpks = f(iv, 1/SF)) dargestellt werden zur Optimierung der Rechenzeit.

7. Verfahren nach einem der Ansprüche 5 oder 6, **dadurch gekennzeichnet, daß** die physikalisch-mathematische Modellgleichung für die Druckvorgaben (p$_{1,soll}$, p$_{2,soll}$) in Abhängigkeit von einer geforderten Verstellgradientenvorgabe (div/dt) als Vorsteuerung in einen Regelkreis eingebunden wird.

8. Verfahren nach Anspruch 7, **dadurch gekennzeichnet, daß** die Auswertung der Modellgleichungen für die beiden Variatorscheiben parallel erfolgt.

9. Verfahren nach Anspruch 7, **dadurch gekennzeichnet, daß** lediglich die Modellgleichung der aktuellen Stellgröße ausgewertet wird und dass erst bei Erkennen der Notwendigkeit eines Zustandswechsels entsprechend umgeschaltet und die Auswertung der Modellgleichung für die andere Seite durchgeführt wird.

**Claims**

1. The invention relates to a method for adjusting the transmission ratio of a continuously variable transmission provided with a variator, with minimal pressure forces (p1 min; p2 min) being continuously calculated on the basis of a current multiplication and a current torque to be transmitted for the two variator disks for wrapping-element contact-pressure, as well as a preset pressure value (p1 nominal) for ratio adjustment of the variator, **characterized in that** either the primary or the secondary disk is determined as the control variable to be used for the variator ratio (iv), with ratio adjustment depending on the minimum pressure calculated (p1 min; p2 min), with determination of the control variable being effected through a comparison of the required preset values (p1 nominal; p2 nominal) with the calculated minimum pressure values (p1 min; p2 min), in such a way that the control variable changes from the primary to the secondary side if a condition p1 nominal ≤ p1 min, i.e., preset primary pressure less than or equal to minimal primary pressure, is fulfilled, and that the control variable changes from the secondary to the primary side if a condition p2 nominal s p2 min, i.e., preset secondary pressure less or equal to minimal secondary pressure, is fulfilled, with the primary side being the control variable at the start of the process and with the preset pressure (p1 nominal) required for the primary disk capable of exceeding the preset pressure (p2 nominal) required for the secondary disk.

2. Method according to claim 1, **characterized in that** calculation of the minimum contact pressures (p1 min; p2 min) is carried out on the basis of a physical-mathematical model.

3. Method according to claim 2, **characterized in that** calculation of the minimum contact pressures (p1 min; p2 min) is carried out on the basis of the following equations:

$$p_{1,min} = \frac{T_1 \cdot \cos(\alpha)}{2 \cdot \mu \cdot A_1 \cdot r_1} \cdot SF_1$$

$$p_{2,min} = \frac{T_1 \cdot \cos(\alpha)}{2 \cdot \mu \cdot A_2 \cdot r_1} \cdot SF_2$$

with:

P1 min:  minimum contact pressure, primary side
P2 min:  minimum contact pressure, secondary side
T1:  drive torque on primary side of variator
A1:  disk surface of the primary side
A2:  disk surface of the secondary side
r1:  current radius, primary side
r2:  current radius, secondary side
α:  disk angle
μ:  friction coefficient of belt/pulley contact
SF1:  safety factor of primary side
SF2:  safety factor of secondary side

with a separately adjustable safety factor (SF1, SF2) being assigned to each variator side and calculation of the current radii (r1, r2) being based on the fixed geometrical conditions.

4. Method according to claim 3, **characterized in that** for computing-time optimization, the correlations for calculating the minimum contact pressures (p1 min; p2 min) are stored via program maps in the transmission control unit as functions of the variator ratio (iv) and primary-side drive torque (T1 ).

5. Method according to one of the preceding claims, **characterized in that** the adjustment gradient (div/dt) of the variator, which depends on the pressures introduced on the primary and secondary ends, is represented as physical-mathematical model equation as follows:

$$k(iv) \cdot \frac{div}{dt} = p_2 \cdot A_2 \cdot k_p k_s - p_1 \cdot A_1$$

with:

k (iv):     ratio-dependent damping coefficient
div/dt:     adjustment gradient (ratio gradient)
p1:         control pressure, primary side
p2:         control pressure, secondary side
A1:         disk surface of the primary side
A2:         disk surface of the secondary side
kpks:       adjustment force ratio

with the following formulas being applicable for the preset pressure values (p1 nominal; p2 nominal) for the primary and/or secondary disk depending on the adjustment gradient specified (div/dt):

$$p_{1,soll} = \frac{1}{A_1}\left(p_{2,min} \cdot A_2 \cdot k_p k_s - k(iv) \cdot \frac{div}{dt}\bigg|_{soll}\right) \text{ for } p_{2,soll} = p_{2,min}$$

and

$$p_{2,soll} = \frac{1}{A2 \cdot k_p k_s}\left(k(iv) \cdot \frac{div}{dt}\bigg|_{soll} + p_{1,min} \cdot A_1\right) \text{ for } p_{1,soll} = p_{1,min}.$$

**6.** Method according to claim 5, <u>**characterized**</u> **in that** the damping coefficient and the adjustment force ratio (kpks) are stored in the transmission control unit as characteristic

$$(k(iv)) = f(iv))$$

or program map (kpks = f (iv, 1/ (SF)) for computing-time optimization.

**7.** Method according to one of the claims 5 or 6, <u>**characterized**</u> **in that** the physical-mathematical model equation for the preset pressures (p1 nominal; p2 nominal) in relation to a required preset adjustment gradient (div/dt) is integrated as pilot control in a control loop.

**8.** Method according to claim 7, <u>**characterized**</u> **in that** evaluation of the model equations for the two variator disks takes place simultaneously.

**9.** Method according to claim 7, <u>**characterized**</u> **in that** only the model equation of the current control variable is evaluated and that only after recognition of the necessity of a change of condition, this change of condition is takes place and evaluation of the model equation for the other side is carried out.

**Revendications**

**1.** Méthode de réglage de la valeur de démultiplication d'une transmission à variation continue équipée d'un variateur. Cette méthode selon l'invention permettant de calculer pour les deux disques du variateur et en continue une pression d'appui minimale (p1, min, p2, min) pour presser l'élément à variation continue et de calculer une consigne de pression (p1, soll P2, soll) pour régler le rapport de démultiplication du variateur en raison d'un rapport de démultiplication actuel et d'un couple actuel à transmettre, **caractérisée en ce que** le disque primaire ou le disque secondaire sont déterminés en tant que variables réglantes applicables pour le rapport de démultiplication du variateur (iv) lors d'une variation du rapport de démultiplication et en fonction de la pression d'appui minimale calculée (p1, min, p2, min), sachant que la détermination de la variable réglante s'effectue par une comparaison des consignes de pression exigées (p1, soll, p2, soll) avec les valeurs minimales de pression d'appui (p1, min, p2, min), et cela de façon à ce que s'ensuit un changement d'état de la variable réglante du côté primaire au côté secondaire, si une condition p1, soll ≤ p1, min (1), c'est-à-dire consigne de pression primaire ≤ pression d'appui minimale primaire, est remplie, et que s'ensuit un changement d'état du côté secondaire au côté primaire, si une condition p2, soll ≤ p2, min (2), c'est-à-dire consigne de pression secondaire ≤ pression d'appui minimale secondaire, est remplie, sachant qu'au début du processus le côté primaire est la variable réglante et sachant que la consigne de pression exigée (p1, soll) pour le disque primaire peut être supérieure à la consigne de pression exigée (p2, soll) pour le disque secondaire.

**2.** Méthode selon la revendication 1, **caractérisée en ce que** le calcul des pressions d'appui minimales (p1, min, p2, min) est effectué sur la base d'un modèle physicomathématique.

**3.** Méthode selon la revendication 2, **caractérisée en ce que** le calcul des pressions d'appui minimales (p1, min, p2, min) est effectué sur la base des formules suivantes :

$$p1, min = \frac{T1 \cdot \cos(\alpha)}{2 \cdot \mu \cdot A1 \cdot r1} \cdot SF_1$$

$$p2, min = \frac{T1 \cdot \cos(\alpha)}{2 \cdot \mu \cdot A2 \cdot r1} \cdot SF_2$$

avec :

p1, min : pression d'appui minimale côté primaire
p2, min : pression d'appui minimale côté secondaire
T1 : couple d'entrée du côté primaire du variateur
A1 : surface du disque du côté primaire
A2 : surface du disque du côté secondaire
r1 : rayon de roulement actuel côté primaire
r2 : rayon de roulement actuel côté secondaire
α : Angle du disque
μ : Coefficient de friction du contact ruban- disque conique
SF1 : Coefficient de sécurité du côté primaire
SF2 : Coefficient de sécurité du côté secondaire,

et sachant que à chaque côté du variateur est associé un coefficient de sécurité réglable séparément (SF1, SF2) et que le calcul des rayons de roulement actuels (r1, r2) est effectué selon les relations géométriques fixes.

**4.** Méthode selon la revendication 3, **caractérisée en ce que** pour l'optimisation du temps de calcul, les relations pour le calcul des forces minimales de pression d'appui (p1, min, p2, min) sont enregistrées dans le boîtier électronique de la boîte de vitesses par l'intermédiaire de champs caractéristiques et en tant que fonctions du rapport de démultiplication du variateur (iv) et du couple d'entrée du côté primaire (T1).

**5.** Méthode selon une des revendications précédentes, **caractérisée en ce que** le gradient de réglage (div/dt) du variateur dépendant des pressions appliquées du côté primaire et du côté secondaire est représenté en tant que équation-type physicomathématique comme suit :

$$k(iv) \cdot \frac{div}{dt} = p2 \cdot A2 \cdot kpks - p1 \cdot A1$$

avec :

k(iv) : coefficient d'amortissement dépendant du rapport de démultiplication
div/dt : gradient de réglage (gradient de démultiplication)
p1 : pression de commande du côté primaire
p2 : pression de commande du côté secondaire
A1 : surface du disque du côté primaire
A2 : surface du disque du côté secondaire

kpks : rapport de la force de réglage,

et sachant que pour les consignes de pression (p1, soll, p2, soll) pour le disque primaire et/ou le disque secondaire et en fonction d'une consigne de gradient de réglage (div/dt) exigée vaut :

$$p1,\ soll = \frac{1}{A1}\ (p2,\ min \cdot A2 \cdot kpks - k(iv) \cdot \frac{div}{dt\ soll})\ \text{pour}\ p2,\ soll = p2,\ min$$

et

$$p2,\ soll = \frac{1}{A2 \cdot kpks}\ (k(iv) \cdot \frac{div}{dt\ soll} + p1,\ min \cdot A1)\ \text{pour}\ p1,\ soll = p1,\ min.$$

**6.** Méthode selon la revendication 5, **caractérisée en ce que** le coefficient d'amortissement et le rapport de force de réglage (kpks) peuvent être représentés sur le boîtier électronique de la boîte de vitesses comme loi (k(iv) = f (iv)) et/ou comme champ caractéristique (kpks = f(iv, 1/SF)) pour optimiser le temps de calcul.

**7.** Méthode selon une des revendications 5 ou 6, **caractérisée en ce que** l'équation-type physicomathématique pour la consigne de pression (pi, soll, p2, soll) est intégrée dans un circuit régulateur en tant que commande pilote en fonction d'une consigne de gradient de réglage (div/dt) exigée.

**8.** Méthode selon la revendication 7, **caractérisée en ce que** l'exploitation des équations-type est effectuée en parallèle pour les deux disques du variateur.

**9.** Méthode selon la revendication 7, **caractérisée en ce qu'**est exploitée uniquement l'équation-type de la variable réglante actuelle et **en ce que** - seulement lorsqu'on reconnaît la nécessité de changer d'état - il y aura une commutation correspondante pour exploiter l'équation-type de l'autre côté.

Fig. 1

Fig. 2

Fig. 3